# EUROPEAN PATENT APPLICATION

(11) **EP 4 383 829 A1**
(43) Date of publication of application: **12.06.2024**
(21) Application number: 22851903.9
(22) Date of filing: 20.07.2022
(51) Int. Cl.: H04W 52/00, H04W 8/22

(54) **COMMUNICATION METHOD AND COMMUNICATION APPARATUS**

(30) Priority: 06.08.2021 CN 202110903506
(71) Applicant: Huawei Technologies Co., Ltd., Shenzhen, Guangdong 518129 (CN)
(72) Inventor: LI, Tie, Shenzhen, Guangdong 518129 (CN); YU, Zheng, Shenzhen, Guangdong 518129 (CN); ZHANG, Yongping, Shenzhen, Guangdong 518129 (CN); YANG, Yubo, Shenzhen, Guangdong 518129 (CN); LIU, Kunpeng, Shenzhen, Guangdong 518129 (CN)
(74) Representative: Gill Jennings & Every LLP
(86) International application number: PCT/CN2022/106814
(87) International publication number: WO 2023/011189

(57) **Abstract**

A communication method and apparatus are provided, to support PHR calculation and reporting in an mTRP scenario. A terminal reports a second capability, where the second capability includes at least one of the following: a quantity of calculated power headroom reports PHR supported by the terminal is N, a quantity of component carriers CC supported by the terminal is L, one or more of the L CCs support a plurality of calculated PHRs, a sum of quantities of calculated PHRs supported by the L CCs is equal to N, and L and N are positive integers; a quantity of reported PHRs supported by the terminal is M, a quantity of component carriers CC supported by the terminal is L, one or more of the L CCs support a plurality of reported PHRs, a sum of quantities of reported PHRs supported by the L CCs is equal to M, and M is a positive integer; and a quantity of calculated and reported PHRs supported by the terminal is P, a quantity of component carriers CC supported by the terminal is L, one or more of the L CCs support a plurality of calculated and reported PHRs, a sum of quantities of calculated and reported PHRs supported by the L CCs is equal to P, and P is a positive integer.

## Description

This application claims priority to Chinese Patent Application No. 202110903506.3, filed with the China National Intellectual Property Administration on August 6, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

Multiple transmission reception point (multiple transmission reception point, mTRP) transmission is introduced in Rel-16 to improve user experience at a cell edge. However, due to time limitation of Rel-16, only physical downlink shared channel (physical downlink shared channel, PDSCH) enhancement for a single downlink control information (downlink control information, DCI) scheduling mTRP and a multi-DCI scheduling mTRP is standardized. Rel-17 continues to standardize mTRP transmission to further enhance mTRP performance. Main content relates to physical downlink control channel (physical downlink control channel, PDCCH) enhancement, physical uplink control channel (physical uplink control channel, PUCCH) enhancement, and physical uplink shared channel (physical uplink shared channel, PUSCH) enhancement. A main PUSCH enhancement solution is that repeated transmission is performed on different TRPs (that is, a plurality of TRPs). In addition, a current protocol supports only single-CC and multi-CC PHR calculation and reporting, but does not support mTRP PHR calculation and reporting. The mTRP PUCCH or PUSCH enhancement is introduced in Rel-17. Therefore, an mTRP PHR also needs to be enhanced.

### SUMMARY

This application provides a communication method and apparatus, to support PHR calculation and reporting in an mTRP scenario.

According to a first aspect, a communication method is provided. The communication method may be performed by a terminal device, or may be performed by a chip or a circuit disposed in the terminal device. This is not limited in this application. For ease of description, an example in which the method is performed by the terminal device is used for description below.

The method includes: A terminal supports a first capability. The first capability includes that a total quantity of access network devices supported by the terminal is N, a quantity of component carriers CC supported by the terminal is M, one or more of the M CCs support a plurality of access network devices, and a sum of quantities of access network devices supported by the M CCs is equal to N. The terminal device calculates and reports, based on the first sharing capability, power headroom reports PHR of a plurality of access network devices supported by a first CC, and the first CC is a CC supported by the terminal.

Correspondingly, a network device receives the first capability sent by the terminal, and configures first configuration information for the terminal. The first configuration information includes that the total quantity of access network devices supported by the terminal is N, the quantity of component carriers CC supported by the terminal is M, the one or more of the M CCs support the plurality of access network devices, and the sum of quantities of access network devices supported by the M CCs is equal to N. The terminal device calculates and reports, based on the first sharing capability, the power headroom reports PHR of the plurality of access network devices supported by the first CC, and the first CC is the CC supported by the terminal.

According to a second aspect, a communication method is provided. The method includes: A terminal reports a second capability, where the second capability includes at least one of the following: a total quantity of calculated power headroom reports PHR supported by the terminal is N, a quantity of component carriers CC supported by the terminal is L, one or more of the L CCs support a plurality of calculated PHRs, and a sum of quantities of calculated PHRs supported by the L CCs is equal to N;
a quantity of reported PHRs supported by the terminal is M, a quantity of component carriers CC supported by the terminal is L, one or more of the L CCs support a plurality of reported PHRs, and a sum of quantities of reported PHRs supported by the L CCs is equal to M; and
a quantity of calculated and reported PHRs supported by the terminal is P, a quantity of component carriers CC supported by the terminal is L, one or more of the L CCs support a plurality of calculated and reported PHRs, and a sum of quantities of calculated and reported PHRs supported by the L CCs is equal to P.

Correspondingly, the network device receives the second capability sent by the terminal, and configures second configuration information for the terminal, where the second configuration information includes at least one of the following:
the total quantity of calculated power headroom reports PHR supported by the terminal is N, the quantity of component carriers CC supported by the terminal is L, the one or more of the L CCs support the plurality of calculated PHRs, and the sum of quantities of calculated PHRs supported by the L CCs is equal to N;
the quantity of reported PHRs supported by the terminal is M, the quantity of component carriers CC supported by the terminal is L, the one or more of the L CCs support the plurality of reported PHRs, and the sum of quantities of reported PHRs supported by the L CCs is equal to M; and
the quantity of calculated and reported PHRs supported by the terminal is P, the quantity of component carriers CC supported by the terminal is L, the one or more of the L CCs support the plurality of calculated and reported PHRs, and the sum of quantities of calculated and reported PHRs supported by the L CCs is equal to P.

According to a third aspect, a communication method is provided. The method includes: sending first indication information. The first indication information indicates whether a terminal device calculates and reports an actual power headroom report PHR based on a first channel transmission instance, the first channel transmission instance is one or more of channel transmission repetition instances of a plurality of access network devices supported by a first component carrier CC, and the first CC is a CC supported by the terminal.

With reference to the third aspect, in some implementations of the third aspect, the first indication information is one or more of a radio resource control message, a media access control control element MAC-CE, or downlink control information DCI.

According to a fourth aspect, a communication method is provided. The method includes: receiving first indication information. The first indication information indicates whether a terminal device calculates and reports an actual power headroom report PHR based on a first channel transmission repetition instance, the first channel transmission is one or more of channel transmission repetition instances of a plurality of access network devices supported by a first component carrier CC, and the first CC is a CC supported by the terminal.

With reference to the fourth aspect, in some implementations of the fourth aspect, the first indication information is one or more of a radio resource control message, a media access control control element MAC-CE, or downlink control information DCI.

According to a fifth aspect, a communication method is provided. The method includes: configuring triggered reporting of power headroom reports PHR of two access network devices of a first component carrier CC based on each access network device, where the first CC is a CC supported by a terminal. When reporting of a first PHR is triggered, the terminal reports the PHRs corresponding to the two access network devices, and the first PHR is any one of the two access network devices; when reporting of a PHR of a first access network device is triggered, the terminal reports the PHR corresponding to the first access network device, where a first PHR is any one of the two access network devices; when there is no channel, between moments at which reporting of the two access network devices is triggered, that can carry a PHR of a first access network device or the PHRs of the two access network devices, the terminal transmits the PHRs of the two access network devices on a first available channel after reporting of a PHR of a second access network device is triggered, and a moment at which reporting of the PHR of the first access network device of the two access network devices is triggered is before a moment at which reporting of the PHR of the second access network device of the two access network devices is triggered; and moments at which reporting of the two access network devices is triggered are less than a first threshold or within a trigger window, the terminal transmits the PHRs of the two access network devices on a first available channel after reporting of a PHR of a second access network device is triggered, and a moment at which reporting of a PHR of a first access network device of the two access network devices is triggered is before a moment at which reporting of the PHR of the second access network device of the two access network devices is triggered.

According to a sixth aspect, this application provides a communication apparatus. The communication apparatus has a function of implementing the method according to any one of the first aspect, the second aspect, the fourth aspect, or the fifth aspect, and possible implementations of the first aspect, the second aspect, the fourth aspect, or the fifth aspect. The function may be implemented by hardware, or may be implemented by hardware executing corresponding software. The hardware or the software includes one or more units corresponding to the foregoing function.

In an example, the communication apparatus may be a terminal device.

In another example, the communication apparatus may be a component (for example, a chip or an integrated circuit) installed in a terminal device.

According to a seventh aspect, this application provides a communication apparatus. The communication apparatus has a function of implementing the method according to the third aspect or a possible implementation of the third aspect. The function may be implemented by hardware, or may be implemented by hardware executing corresponding software. The hardware or the software includes one or more units corresponding to the foregoing function.

In an example, the communication apparatus may be a network device.

In another example, the communication apparatus may be a component (for example, a chip or an integrated circuit) installed in a network device.

According to an eighth aspect, this application provides a communication device, including at least one processor. The at least one processor is coupled to at least one memory, and the at least one memory is configured to store a computer program or instructions. The at least one processor is configured to: invoke the computer program or the instructions from the at least one memory, and run the computer program or the instructions, to enable the communication device to perform the method according to any one of the first aspect to the sixth aspect and the possible implementations of the first aspect to the sixth aspect.

According to a ninth aspect, a processor is provided, including: an input circuit, an output circuit, and a processing circuit. The processing circuit is configured to: receive a signal by using the input circuit, and transmit a signal by using the output circuit, to enable the method according to any one of the first aspect to the sixth aspect and the possible implementations of the first aspect to the sixth aspect to be implemented.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a tenth aspect, this application provides a computer-readable storage medium. The computer-readable storage medium stores computer instructions, and when the computer instructions are run on a computer, the method according to any one of the first aspect to the sixth aspect and the possible implementations of the first aspect to the sixth aspect is enabled to be performed.

According to an eleventh aspect, this application provides a computer program product. The computer program product includes computer program code, and when the computer program code is run on a computer, the method according to any one of the first aspect to the sixth aspect and the possible implementations of the first aspect to the sixth aspect is enabled to be performed.

According to a twelfth aspect, this application provides a chip, including a processor and a communication interface. The communication interface is configured to: receive a signal, and transmit the signal to the processor; and the processor processes the signal, to enable the method according to any one of the first aspect to the sixth aspect and the possible implementations of the first aspect to the sixth aspect to be performed.

According to a thirteenth aspect, this application provides a communication system, including the foregoing terminal device and network device.

### BRIEF DESCRIPTION OF DRAWINGS

FIG. 1 is a schematic diagram of a network architecture according to an embodiment of this application;
FIG. 2 is a schematic diagram of a PHR calculation time sequence;
FIG. 3 is a schematic diagram of calculating a "future" PUSCH repetition instance.
FIG. 4 is a schematic flowchart of a communication method according to this application;
FIG. 5 is a schematic flowchart of another communication method according to this application;
FIG. 6 is a schematic diagram in which a base station indicates a terminal to calculate a PUSCH repetition instance according to this application;
FIG. 7 is a schematic flowchart of a time sequence of triggering reporting of PHRs in an mTRP scenario according to this application;
FIG. 8 is a schematic block diagram of a communication apparatus 1000 according to this application; and
FIG. 9 is a schematic diagram of a structure of a communication apparatus 10 according to this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system or a new radio (new radio, NR) system, a vehicle-to-everything (vehicle-to-X, V2X) system, a long term evolution-vehicle (long term evolution-vehicle, LTE-V) system, an Internet of vehicles system, a machine type communication (machine type communication, MTC) system, an Internet of things (Internet of things, IoT) system, a long term evolution-machine (long term evolution-machine, LTE-M) system, a machine-to-machine (machine-to-machine, M2M) system, and the like, where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

The technical solutions provided in this application may be further applied to a future communication system, for example, a sixth generation mobile communication system. This is not limited in this application.

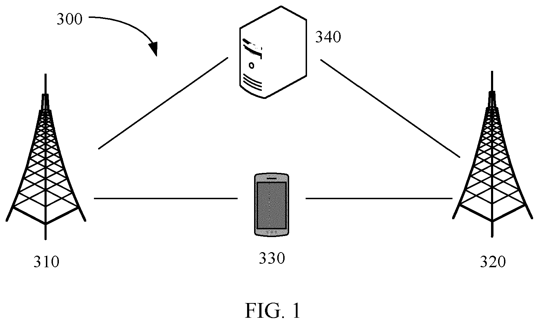

FIG. 1 is a schematic diagram of a network architecture according to an embodiment of this application. As shown in FIG. 1, the communication system 300 may include at least one network device, for example, a network device 310 and a network device 320 shown in FIG. 1. The communication system 300 may further include at least one terminal device, for example, a terminal device 330 shown in FIG. 1. The terminal device 330 may be mobile or fixed. Both the network device 310 and the network device 320 are devices such as base stations or base station controllers that can communicate with the terminal device 330 over a radio link. Each network device can provide communication coverage for a particular geographic area, and can communicate with a terminal device within the coverage (a cell). The wireless communication system 300 may further include at least one core network, for example, a core network 340 shown in FIG. 1. The core network 340 may be a 4G core network, a 5G core network, or the like.

A dual-link architecture may be formed between the core network 340 and the terminal device 330. For example, the network device 310 is an LTE base station serving as a primary base station, the network device 320 is an NR base station serving as a secondary base station, the core network 330 is an evolved packet core (evolved packet core, EPC), control plane connection and data plane connection exist between the network device 310 and the core network 330, and data plane connection exists between the network device 320 and the core network 340. Both the network device 310 and the network device 320 provide air interface transmission resources for data transmission between the terminal device 330 and the core network 330. In other words, an EN-DC dual connectivity (E-UTRA-NR dual connectivity) deployment scenario is formed. In this case, the network device 310 corresponds to an LTE eNB, the network device 320 corresponds to a gNB, and the core network corresponds to the EPC.

It should be understood that FIG. 1 shows two network devices and one terminal device that are used as an example. However, this should not constitute any limitation on this application. Optionally, the communication system 300 may include more network devices, and another quantity of terminal devices may be included within coverage of each network device. Optionally, the communication system 300 may further include a plurality of core network devices. This is not limited in embodiments of this application.

A plurality of antennas may be configured for each communication device such as the network device 310, the network device 320, or the terminal device 330 in FIG. 1. The plurality of antennas may include at least one transmit antenna configured to send a signal and at least one receive antenna configured to receive a signal. In addition, each communication device further additionally includes a transmitter chain and a receiver chain. Persons of ordinary skill in the art may understand that the transmitter chain and the receiver chain each may include a plurality of components (for example, a processor, a modulator, a multiplexer, a demodulator, a demultiplexer, or an antenna) related to signal transmission and reception. Therefore, a network device and a terminal device may communicate with each other by using a multiple-antenna technology.

Optionally, the wireless communication system 300 may further include another network entity, for example, a network controller or a mobility management entity. This is not limited in embodiments of this application.

The network device may communicate with the terminal device. The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, examples of some terminal devices are a mobile phone (mobile phone), a tablet computer, a laptop computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and/or any other suitable device configured to perform communication in a wireless communication system. This is not limited in embodiments of this application.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and that need to work with other devices such as smartphones, for example, various smart bands or smart jewelry for monitoring physical signs.

In addition, the terminal device in embodiments of this application may alternatively be a terminal device in an Internet of things system. IoT is an important part of future development of information technologies. A main technical feature of the IoT is connecting things to networks by using a communication technology, to implement an intelligent network for interconnection between persons and machines or between things.

In addition, in embodiments of this application, the terminal device may further include a sensor, for example, an intelligent printer, a train detector, or a gas station. Main functions of the terminal device include collecting data (by some terminal devices), receiving control information and downlink data from a network device, sending an electromagnetic wave, and transmitting uplink data to the network device.

The network device in embodiments of this application may be a device configured to communicate with a terminal device. The network device may be an evolved NodeB (evolved NodeB, eNB, or eNodeB) in an LTE system, a radio controller in a cloud radio access network (cloud radio access network, CRAN) scenario, a radio network controller (radio network controller, RNC), a base station controller (base station controller, BSC), a home base station (for example, a home evolved NodeB or a home NodeB, HNB), or a baseband unit (baseband unit, BBU). Alternatively, the network device may be a relay station, an access point, a vehicle-mounted device, a wearable device, a network device in a future 5G network, or a network device in a future evolved PLMN network, or may be an access point (access point, AP) in a wireless local area network (wireless local area network, WLAN), a wireless relay node, a wireless backhaul node, a transmission point (transmission point, TP), or a transmission reception point (transmission reception point, TRP), or may be a gNB or a transmission point (TRP or TP) in a new radio (new radio, NR) system, one antenna panel or a group of antenna panels (including a plurality of antenna panels) of a base station in a 5G system, or a network node constituting a gNB or a transmission point, for example, a baseband unit (BBU) or a distributed unit (distributed unit, DU). This is not limited in embodiments of this application.

In some deployments, a gNB may include a central unit (central unit, CU) and a DU. The gNB may further include an active antenna unit (active antenna unit, AAU for short). The CU implements some functions of the gNB, and the DU implements some other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In addition, in embodiments of this application, the network device provides a cell with a service, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. The small cells are characterized by small coverage and a low transmit power, and are applicable to providing a high-rate data transmission service.

In addition, in embodiments of this application, the network device may include a base station (gNB), for example, a macro base station, a micro base station, an indoor hotspot, or a relay node, and has functions of: sending a radio wave to the terminal device, to implement downlink data transmission and control uplink transmission by sending scheduling information, and receiving a radio wave sent by the terminal device, to receive uplink data transmission.

To better understand embodiments of this application, the following first describes concepts in embodiments of this application.
1. A special cell (special cell, SpCell) includes a primary cell (primary cell, PCell) and/or a primary secondary cell (primary secondary cell, PSCell).
2. 5G NR frequency ranges are defined as different FRs: an FR 1 and an FR 2. A frequency range corresponding to the FR 1 includes 450 MHz to 6000 MHz, which is also referred to as a sub-6 GHz frequency band, and a frequency range corresponding to the FR 2 includes 24250 MHz to 52600 MHz, which is also referred to as an above-6 GHz frequency band or a millimeter wave frequency band.
3. An mTRP enables a mobile phone terminal to receive signals from two base stations at the same time. When one base station is blocked, transmission of the signal of the other base station is not affected.
4. A power headroom (power headroom, PH), that is, a difference between a maximum transmit power allowed by a terminal and a PUSCH transmit power currently obtained through evaluation, is introduced in the LTE, and represents a transmit power that can be used by the terminal other than the transmit power used for current PUSCH transmission. In a current NR protocol, a PH function is introduced to more channels. A type (type) 1 PHR (power headroom report) mainly for a PUSCH channel, a type 2 PHR mainly for a PUSCH or PUCCH channel in a multi-radio dual connectivity (multi-radio dual connectivity, MRDC) scenario, and a type 3 PHR mainly for a sounding reference signal (sounding reference signal, SRS) are included. The unit of the PH is dB, and a value range is [-23, 40] dB. If the PH is a negative value, it indicates that a network schedules, for the terminal, a data transmission rate higher than a data transmission rate that can be supported by a current available transmit power of the terminal. One of motivations for defining the PH is that the PH serves as a reference for a base station to allocate an uplink resource, and provides a basis for uplink power control. Specifically, how the base station uses a PH value reported by the terminal depends on an algorithm design of the base station. For example, if the PH value is positive, more resources are subsequently allocated to the terminal for transmission. If the PH value is negative, fewer resources are allocated to the terminal for transmission during next scheduling. A negative PH value exists because the "PUSCH transmit power obtained through evaluation" is calculated based on an actual channel, is not an actual transmit power, and is not limited by the maximum transmit power.
5. A power headroom report (power headroom report, PHR) is a process in which a terminal reports a power headroom to a network side. The process includes triggered reporting, PH calculation, and reporting.

For triggered reporting of the PHR, a current NR protocol supports periodic reporting and event-triggered reporting. The following describes two triggering conditions for triggering reporting of the PHR.
(1) When UE has an uplink resource for transmitting new data, a prohibitPHR-Timer (prohibitPHR-Timer) expires or has expired, and a change value of a path loss has exceeded a given threshold (for example, a value configured in dl-PathlossChange dB) after a last transmission power headroom report. The change value of the path loss is evaluated based on a comparison between a path loss calculated at current time and a path loss at a time moment when the PHR is reported last time. A change of a path loss in a time period between the current time and the last time is not considered. The following two points need attention. First, the "change value" of the path loss is used herein. To be specific, an absolute difference of the path loss is considered regardless of whether the current path loss increases or decreases. Second, if the prohibitPHR-Timer is still running, the PHR cannot be triggered regardless of the change value of the path loss. The prohibitPHR-Timer is used to prevent the UE from frequently sending PHR due to frequent changes of path losses or an excessively low path loss threshold.
(2) A periodicPHR-Timer (periodicPHR-Timer) expires.

For another possible trigger condition, refer to the description in the standard. Details are not described herein again.

This specifically describes regulations related to PH calculation in the NR protocol.

Actual PHR (actual PHR) and virtual PHR (virtual PHR) calculation are supported in the NR protocol. First, a time moment at which a calculated PHR is determined to be an actual PHR (actual PHR) or a virtual PHR (virtual PHR) needs to be determined. The following is specified in a protocol.
(1) When a PHR is transmitted on a dynamically scheduled PUSCH, determining is performed at a DCI receiving moment at which an initial uplink PUSCH is scheduled for the first time, or at any moment between the DCI receiving moment at which the initial uplink PUSCH is scheduled for the first time and a moment at which transmission of an available (the availability means that the current PHR can be dropped) initial uplink PUSCH is started for the first time.
   It should be understood that DCI is carried by a physical downlink control channel PDCCH.
(2) When the PHR is transmitted on a PUSCH configured with scheduling and semi-persistent scheduling, determining is performed at a moment of Tproc duration before actual PUSCH transmission, where Tproc is preparation time of the PUSCH.

If it can be determined at the foregoing moment that an actual target channel or signal (type-1 PHR PUSCH or type-3 PHR SRS) is sent at a reporting moment, the actual PHR is calculated. If no actual target channel or signal is sent, the virtual PHR is calculated.

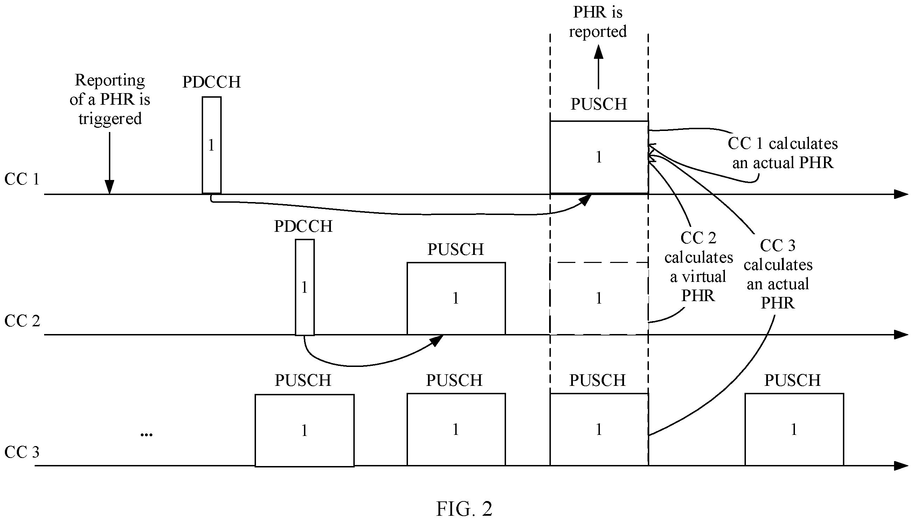

FIG. 2 is a schematic diagram of a PHR calculation time sequence. As shown in FIG. 2, when PHRs of a CC 1 to a CC 3 are transmitted on a PUSCH in dashed lines corresponding to the component carrier (component carrier, CC) 1, the CC 1 calculates the PHR at a PDCCH moment corresponding to the CC 1 or at any moment between the PDCCH moment corresponding to the CC 1 and a PUSCH transmission moment corresponding to the CC 1. After a PDCCH is successfully decoded, UE may know that the CC 1 has an actual PUSCH sent at a reporting moment corresponding to a dashed box, and consequently the CC 1 calculates an actual PHR. For the CC 2, the UE determines, at the PDCCH moment corresponding to the CC 1 or at any moment between the PDCCH moment corresponding to the CC 1 and the PUSCH transmission moment corresponding to the CC 1, that the CC 2 has no actual PUSCH transmitted at the reporting moment corresponding to the dashed box, and consequently the CC 2 calculates a virtual PHR. Similarly, for the CC 3, it may be determined that the CC 3 has a semi-persistent PUSCH (Config Grant PUSCH) transmitted (an RRC configuration that may be known by the UE in advance) at the reporting moment corresponding to the dashed box, and consequently the CC 3 calculates an actual PHR.

For how to determine a PUSCH that is used to transmit a PHR, it is specified in a protocol that transmission is performed on a first available PUSCH after triggering. The availability means that the PHR can still be transmitted on the PUSCH when a logical channel transmission priority is met.

For the calculation formulas of the actual PH and the virtual PH, refer to the description in the protocol. Details are not described herein again.

The following describes reporting of the PHR in detail. For example, the PHR can be reported by using a MAC-CE. Two formats are specified in the protocol: a single-CC format and a multi-CC format.

A single-CC PHR MAC-CE reporting format is shown in Table 1.

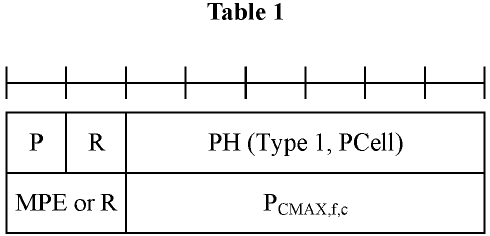

Bit fields are represented as follows.

R is a reserved bit, and is set to 0.

PH indicates a PH value, and has a length of 6 bits. PH values of the 6-bit field one-to-one correspond to values of a level table.

For P, if a reported MPE value is configured (that is, MPE-Reporting-FR2 is configured), and a calculated power management maximum power reduction (power management maximum power reduction, P-MPR) value under a radiation constraint meets a threshold, and is less than P-MPR_00, the field is set to 0, and the value is set to 1 in another case. If the reported MPE value is not configured (that is, the MPE-Reporting-FR2 is not configured) or is configured in an FR 1 frequency band, the field indicates whether there is power reduction caused by another reason. If there is no power reduction caused by another reason, and corresponding P_{CMAX, f, c} values are different, the field is set to 1.

For MPE, if a maximum permissible exposure (maximum permissible exposure, MPE) value is configured (that is, MPE-Reporting-FR2 is configured) to be reported, the MPE value is reported. If the MPE value is not configured (that is, MPE-Reporting-FR2 is not configured) to be reported, a current operating frequency band works in the FR 1 frequency band, or the P field is set to 0, the field is a reserved field.

P_{CMAX, f, c} indicates a maximum transmit power of a terminal that calculates a PH value.

A configured multi-CC PHR MAC-CE reporting format whose serving cell index is less than 8 is shown in Table 2.

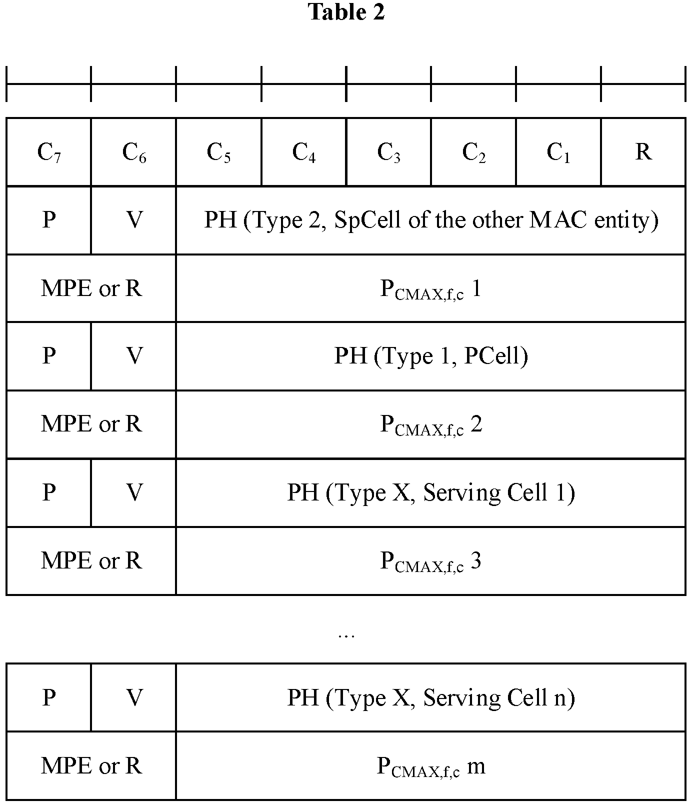

A configured multi-CC PHR MAC-CE reporting format whose serving cell index is greater than or equal to 8 is shown in Table 3.

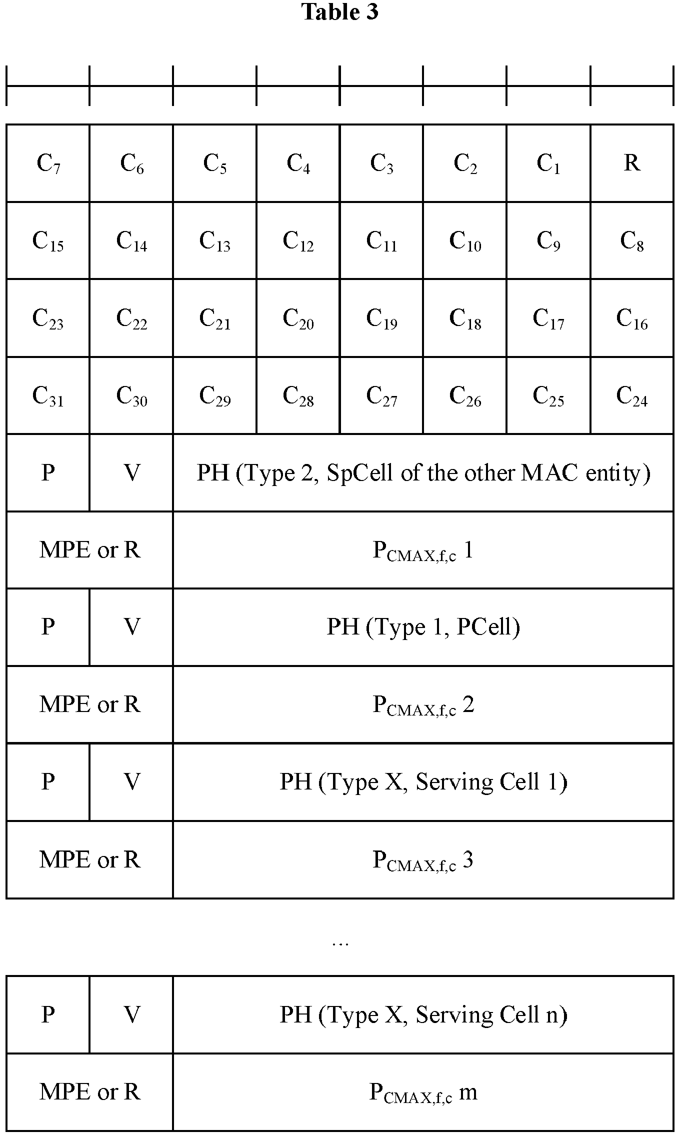

Bit fields are represented as follows.

R is a reserved bit, and is set to 0.

Ci indicates whether to report a PH value of a serving cell, of a terminal, whose index is i, where 1 indicates reporting, and 0 indicates not reporting.

V indicates whether the reported PHR value is an actual PH value or a virtual PH value. For type 1 and type 3 PHs, 0 indicates the actual PH value, and 1 indicates the virtual PH value. For a type 2 PH, 1 indicates the actual PH value, and 0 indicates the virtual PH value. In addition, V also indicates whether associated P_{CMAX, f, c} and an associated MPE field exist, where 0 indicates that associated P_{CMAX, f, c} and the associated MPE field exist, and 1 indicates that associated P_{CMAX, f, c} and the associated MPE field do not exist.

PH indicates the reported PH value.

For P, if a reported MPE value is configured (that is, MPE-Reporting-FR2 is configured), and a calculated P-MPR value meets a threshold and is less than P-MPR_00, the field is set to 0, and the value is set to 1 in another case. If the reported MPE value is not configured (that is, the MPE-Reporting-FR2 is not configured) or is configured in an FR 1 frequency band, the field indicates whether there is power reduction caused by another reason. If there is no power reduction caused by another reason, and corresponding P_{CMAX, f, c} values are different, the field is set to 1.

P_{CMAX, f, c} indicates a maximum transmit power of an NR terminal or indicates a maximum transmit power of an E-UTRA (LTE) terminal if (the V field indicates 0) presents.

For MPE, if an MPE value is configured (that is, MPE-Reporting-FR2 is configured) to be reported, the MPE value is reported. If the MPE value is not configured (that is, MPE-Reporting-FR2 is not configured) to be reported, a current operating frequency band works in the FR 1 frequency band, or the P field is set to 0, the field is a reserved field.

As shown in the above, single-CC and multi-CC PHR calculation and reporting are supported currently. mTRP PUCCH or PUSCH enhancement is introduced in Rel-17. Therefore, an mTRP PHR also needs to be enhanced. This application resolves a series of problems related to the enhancement of the mTRP PHR, including problems such as mTRP PHR calculation and reporting capabilities, mTRP actual PHR and virtual PHR calculation, a time sequence of triggering reporting of mTRP PHRs, and mTRP PHR and MPE MAC-CE reporting formats.

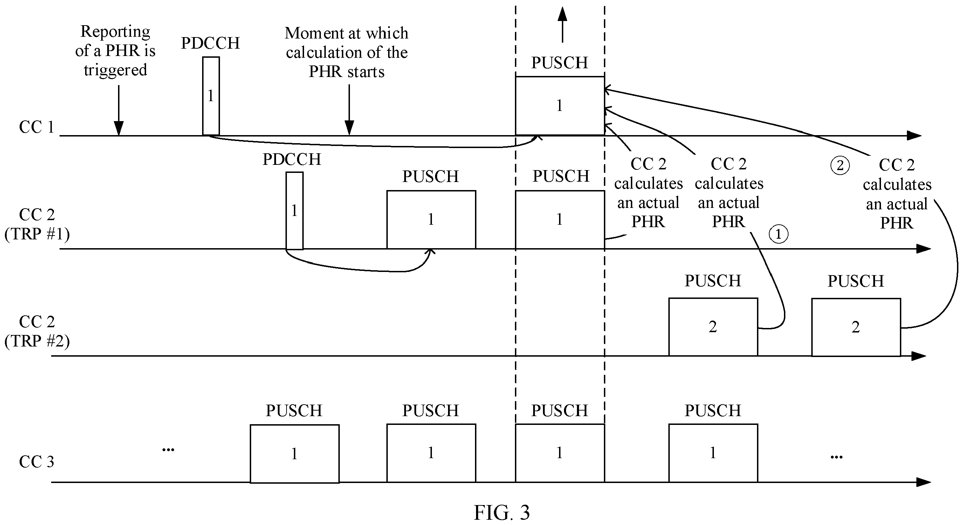

FIG. 3 is a schematic diagram of calculating a "future" PUSCH repetition instance.

It can be learned that FIG. 3 includes a CC 1 to a CC 3, and the CC 2 supports two TRPs (a TRP #1 and a TRP #2). It may be understood that a terminal communicates with four TRPs on the three CCs. UE transmits PHRs from the CC 1 to the CC 3 on a PUSCH in dashed lines corresponding to the CC 1. It can be learned from the foregoing description that a main solution of PUSCH enhancement is performing repeated sending on different TRPs. In this case, in FIG. 3, it may be understood that the UE receives, on the CC 2, the PDCCH sent by the TRP #1, and the CC 2 supports the two TRPs. The UE sends two PUSCHs to the TRP #1 on the CC 2, and the UE also sends the two PUSCHs to the TRP #2 on the CC 2. The four PUSCHs are repeatedly sent PUSCHs, in other words, the four PUSCHs include same information. For a case in which the CC 2 corresponds to the two TRPs, there may be the following three solutions for PHR calculation and reporting of the two TRPs:
solution 1: calculate for one time, report for one time, and report PH values of different TRPs through dynamic TRP switching;
solution 2: calculate for two times, and report for one time;
reporting manner 1: report a minimum value;
reporting manner 2: report a maximum value;
reporting manner 3: perform time division reporting, in other words, a PH value of one TRP is reported at a time; and
solution 3: calculate for two times, and report for two times.

It should be understood that the calculation and reporting herein refer to calculating and reporting PHs of one or two TRPs corresponding to the CC 2. The foregoing solution has the following problems. For the solution 1, a PH value of only one TRP is reported at a time; and consequently reporting is not prompt, and an aging problem occurs. For the solution 2, similar to the solution 1, reporting is not prompt, an aging problem occurs, and calculation complexity is twice higher than that of an existing protocol. The reporting manner 1 and manner 2 may cause system capacity to reduce, and the reporting manner 3 causes an aging problem. For the solution 3, calculation complexity and reporting overheads are twice higher than that of an existing protocol.

In addition, when the PH value is calculated by using the solution 3, a "future" PUSCH repetition instance may be calculated. That the calculated PH value cannot reflect an actual scenario situation is caused. As shown in FIG. 3, when the PHR is reported on the PUSCH of the CC 1, the two PUSCHs sent by the UE to the TRP #2 on the CC 2 are not actually sent. Therefore, in PH calculation of the TRP #2 of the CC 2, the "future" PUSCH repetition instance is calculated, and a PUSCH repetition instance used for calculation is not determined.

The following specifically describes the technical solutions of this application.

A technical solution 1 of this application is used to resolve a complexity problem caused by the existing solution 3.

In a manner 1, an example in which a CC supports two TRPs (that is, an example of access network devices) is used for description. That a plurality of TRPs and a plurality of CCs share PHR calculation and reporting capabilities is defined. If the shared capabilities are supported, that two PHRs are calculated and the two PHRs are reported is supported. If the shared capabilities are not supported, that two PHRs are calculated and the two PHRs are reported, or one or two PHRs are calculated and one PHR is reported is supported.

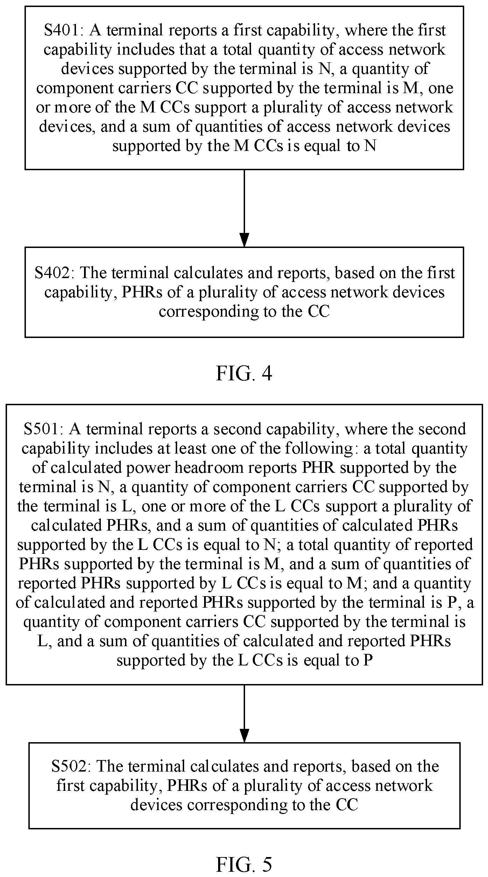

The following describes the sharing capability supported by UE in detail with reference to FIG. 4 and FIG. 5.

FIG. 4 is a schematic flowchart of a communication method according to this application.

S401: A terminal reports a first capability, where the first capability includes that a total quantity of access network devices supported by the terminal is N, a quantity of component carriers CC supported by the terminal is M, one or more of the M CCs support a plurality of access network devices, a sum of quantities of access network devices supported by the M CCs is equal to N, and M and N are positive integers.

Correspondingly, the network device receives the first capability sent by the terminal, and configures first configuration information for the terminal. The first configuration information includes the total quantity N of access network devices supported by the terminal.

Optionally, S402: The terminal calculates and reports, based on the first capability, PHRs of the plurality of access network devices corresponding to the CC.

For ease of understanding, for example, a total quantity of TRPs supported by UE is first defined as A=32 (that is, 16*1+8*2=32); a quantity of supported CCs is defined as B=24 (that is, 16+8=24); and a quantity of CCs supporting a plurality of TRPs is defined as C=8 (it is assumed that each CC supports two TPRs). It can be learned that, in the 24 CCs, a quantity of CCs supporting one TRP is 16, and a quantity of CCs supporting two TRPs is 8. The quantity of supported CCs and the quantity of CCs supporting a plurality of TRPs are separately defined, and hardware time and costs of the terminal are affected by the two parameters.

FIG. 5 is a schematic flowchart of another communication method according to this application.

S501: A terminal reports a second capability, where the second capability includes at least one of the following:
a total quantity of calculated power headroom reports PHR supported by the terminal is N, a quantity of component carriers CC supported by the terminal is L, one or more of the L CCs support a plurality of calculated PHRs, a sum of quantities of calculated PHRs supported by the L CCs is equal to N, and L and N are positive integers;
a total quantity of reported PHRs supported by the terminal is M, a quantity of component carriers CC supported by the terminal is L, one or more of the L CCs support a plurality of reported PHRs, a sum of quantities of reported PHRs supported by the L CCs is equal to M, and M is a positive integer; and
a quantity of calculated and reported PHRs supported by the terminal is P, a quantity of component carriers CC supported by the terminal is L, one or more of the L CCs support a plurality of calculated and reported PHRs, a sum of quantities of calculated and reported PHRs supported by the L CCs is equal to P, and P is a positive integer.

Correspondingly, the network device receives the first capability sent by the terminal, and configures second configuration information for the terminal. The second configuration information includes at least one of the following: the total quantity of calculated power headroom reports PHR supported by the terminal is N, the total quantity of reported PHRs supported by the terminal is M, and the quantity of calculated and reported PHRs supported by the terminal is P.

Optionally, S502: The terminal calculates and reports, based on the first capability, PHRs of a plurality of access network devices corresponding to the CC.

It can be learned that the method 2 is essentially the same as the method 1, and the quantity of PHRs is mainly considered in the method 2.

In a manner 2, an example in which a CC supports two TRPs (that is, an example of access network devices) is used for description. That two PHRs are calculated and the two PHRs are reported is supported. If it is not supported, that one or two PHRs are calculated and one PHR is reported is supported.

In the technical solution 1, the multi-CC PHR calculation and reporting capabilities are shared with the multi-TRP PHR calculation and reporting capabilities, in other words, the multi-CC PHR calculation and reporting capabilities are reduced to implement multi-TRP PHR calculation and reporting. This implements multi-TRP PHR calculation and reporting without increasing the capabilities. In addition, a default multi-TRP calculation and reporting solution can be used for a terminal device that does not support the capabilities. Compared with an existing solution, the technical solution 1 considers a trade-off between the multi-CC capabilities and the multi-TRP capabilities, can also report a PHR of each of a plurality of TRPs without increasing costs and power consumption of a terminal, and can also report each TRP of each CC in a multi-CC and multi-TRP case and in a given configuration. In this solution, maximum capabilities may not be completely reached in a scenario in which the plurality of CCs and the plurality of TRPs are deployed together. Consequently, sharing can be implemented.

A technical solution 2 is used to resolve a problem that a real scenario cannot be reflected by a calculated PH value in the solution 3.

Manner 1: When a repeated PHR of a multi-TRP PUSCH is calculated, a base station indicates, by using first indication information, a terminal to perform calculation based on a PUSCH repetition instance.

Optionally, the first indication information may be any one of radio resource control (radio resource control, RRC), a media access control control element (media access control control element, MAC-CE), or DCI.

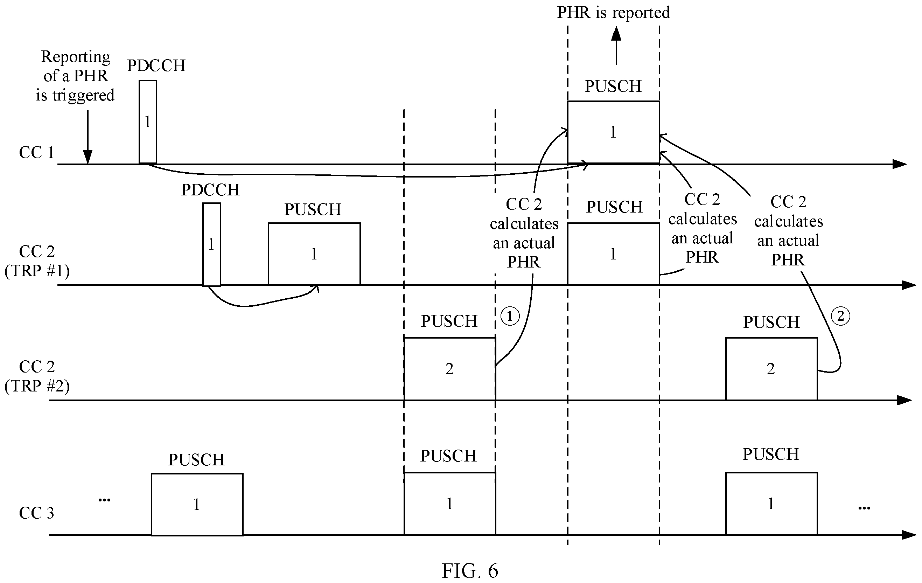

The base station indicates, by using the first indication information, the terminal to calculate and report a PHR by using one or more PUSCH instances or a specific PUSCH instance corresponding to the TRP #2 supported by the CC 2 (as shown in FIG. 3 and FIG. 6, a circle 1 and a circle 2 that correspond to the TRP #2 supported by the CC 2 indicate actual PHRs).

Currently, a main PUSCH enhancement solution is performing repeated sending on different TRPs. A repetition mode includes a cyclic beam pattern (cyclic beam pattern) and a sequential beam pattern (sequential beam pattern). It can be seen that FIG. 3 corresponds to the sequential beam pattern, and FIG. 6 corresponds to the cyclic beam pattern.

Optionally, the base station may determine whether transmission actually exists, to perform configuration. For example, if the base station indicates to use an instance for calculation, subsequent scheduling should also be performed by using this scenario during scheduling.

The scenario may be understood as a case in which a plurality of CCs perform transmission at the same time.

Manner 2: A terminal calculates and reports a PHR by using one or more instances or a specific instance, and carries information about the calculated and reported PUSCH instance during reporting.

Optionally, behavior of both calculating and reporting a time domain may be semi-persistent, periodic, or aperiodic behavior.

Optionally, the information about the reported instance may include one or more of the following parameters: a CC index, a cell ID index, a PCI index, a TRP index, a (base station and or terminal) panel index, a beam index, a repetition instance index, and a quantity of calculated repetition instances.

Manner 3: It is specified in a protocol that one or more instances or a specified instance is used to calculate and report a PHR. For example, the PHR is calculated and reported by using a first (repeated) instance, a last (repeated) instance, a (repeated) instance that is actually sent, a (repeated) instance that is not actually sent, or first and second (repeated) instances.

Manner 4: Two TRPs calculate and report actual PH (actual PH) values. For a repeated instance at a non-reporting moment, a case in which the repeated instance is actually transmitted and scheduled is the same as a case of a PH calculation moment. For the case, one manner may be understood as a scheduling case, that is, a case in which the transmission overlaps with another CC.

Alternatively, actual transmission of a repetition instance that does not overlap with transmission of another CC is the same as a scheduling case of an actual PH calculation moment of the repetition instance.

The technical solution 2 resolves a problem that when calculating and reporting a PHR of a TRP at the non-reporting moment, the terminal calculates an actual PHR or a virtual PHR, and a problem of whether to calculate a "future" sending instance. In this solution, the base station and the terminal can reach a consensus to reflect an actual situation of a scenario through an indication of the base station, by the terminal calculating and reporting related indication information, or by constraining a calculation instance by using the protocol.

A technical solution 3 is used to resolve a problem of a time sequence of triggering reporting of PHRs in an mTRP scenario.

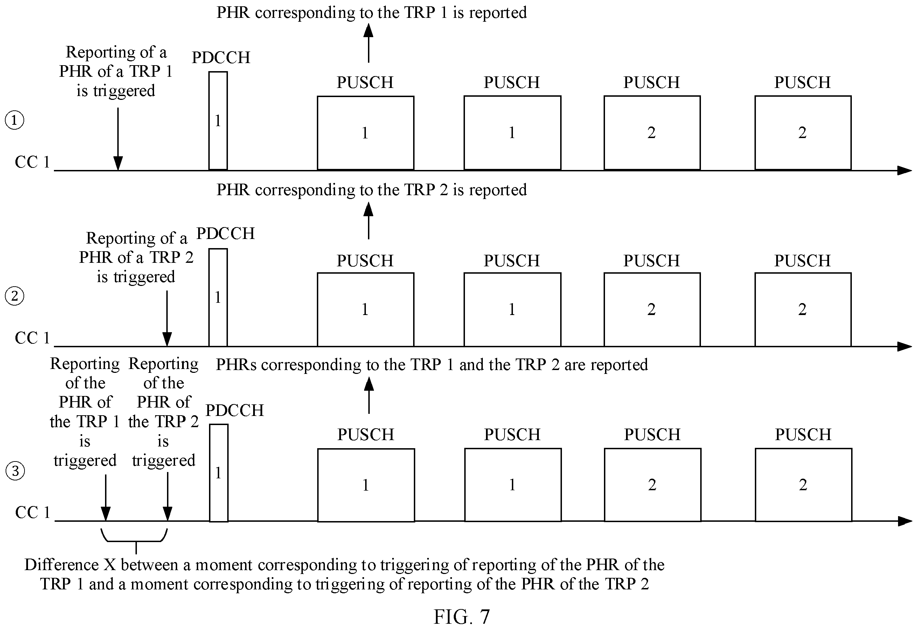

Manner 1: A triggered reporting event or periodic reporting is configured based on each TRP (two prohibitPHR-Timers prohibitPHR-Timers, two periodicPHR-Timers periodicPHR-Timers, and two pieces of dl-PathlossChange dB dl-PathlossChange dB are separately configured, in other words, each TRP is configured with one prohibitPHR-Timer, one periodicPHR-Timer, and one piece of dl-PathlossChange dB).
(1) When reporting of a PHR of any TRP is triggered, PHRs corresponding to two TRPs are reported.
(2) When reporting of a PHR of any TRP is triggered, the PHR corresponding to the TRP is reported, as shown in ① or ② in FIG. 7.
(3) If there is no channel (PUSCH or PUCCH) that can carry a PHR of a first TRP or PHRs of two TRPs between occurrence moments of triggered reporting events of the two TRPs, the PHRs of the two TRPs are transmitted on a first available channel after a second TRP is triggered.
(4) If a given threshold is met between occurrence moments of triggered reporting events of two TRPs (for example, X shown in ③ in FIG. 7 is less than the preset given threshold), the occurrence moments are within a trigger window (the newly defined trigger window is used to prevent frequent reporting of each TRP), or before prohibitPHR-Timers of the two TRPs expire (the defined timers start when the reporting event of a first TRP is triggered, and before expiring, the timers prohibit simultaneous reporting of the two TRPs), PHRs of the two TRPs are transmitted on a first available channel after a second TRP is triggered.

Manner 2: A triggered reporting event or periodic reporting is configured based on all TRPs (one prohibitPHR-Timer, one periodicPHR-Timer, and one piece of dl-PathlossChange dB are configured for and shared by all the TRPs), and when reporting of a PHR is triggered, reporting is performed according to technical solutions 1, 2, and 4.

In this technical solution, different TRP PHR content is reported under different trigger conditions, so that PHR calculation and reporting complexity of a terminal is reduced, and reporting resource overheads are also reduced.

In a technical solution 4, an mTRP PHR reporting signaling format is proposed.

For example, an mTRP PHR may be reported by using a physical layer channel (PUCCH or PUSCH), a MAC-CE, or RRC.

Optionally, an existing MAC-CE PHR format is reused and extended, and the PHR and/or MPE are/is reported.

Optionally, a new MAC-CE format is designed to report a PHR of each TRP, and/or MPE of each TRP, and/or UE side panel/beam-level MPE.

In Table 4, the PHR MAC-CE formats (two formats in which the CC index is less than 8 and the CC index is greater than or equal to 8 are supported, the following uses the CC index less than 8 as an example, and the rest can be deduced by analogy for the CC index greater than or equal to 8) in the existing Table 2 are reused and extended, and the R bit indicates whether it is an mTRP scenario.

In a specific implementation, R in Table 4 is 0, indicating that it is not the mTRP scenario, and another parameter in Table 4 remains an original meaning in Table 2. If R is 1, it indicates the mTRP scenario. In this case, Ci indicates whether a first TRP and a second TRP that are of a terminal and whose serving cell indexes are i are reported at the same time. When C is set to 0, it indicates that the first TRP and the second TRP are reported at the same time. When C is set to 1, it indicates that the first TRP or the second TRP is not reported. For another parameter that is not updated, refer to descriptions in Table 2. Details are not described herein again.

In a specific implementation, R in Table 4 is 0, indicating that it is not the mTRP scenario, and another parameter in Table 4 remains an original meaning in Table 2. If R is 1, it indicates the mTRP scenario. In this case, C₁ indicates whether to report a second TRP of a PCell, and C₂ᵢ/C₂ᵢ₊₁ respectively indicates a first TRP and a second TRP that are of a terminal and whose serving cell indexes are i, where i=1, 2, and 3. When C is set to 0, it indicates that the value of Ci is reported. When C is set to 1, it indicates that the value of Cᵢ is not reported. For another parameter that is not updated, refer to descriptions in Table 2. Details are not described herein again.

In Table 5, the PHR MAC-CE formats (two formats in which the CC index is less than 8 and the CC index is greater than or equal to 8 are supported, the following uses the CC index less than 8 as an example, and the rest can be deduced by analogy for the CC index greater than or equal to 8) in the existing Table 2 are reused and extended, and the R bit indicates whether it is an mTRP scenario.

In a specific implementation, R in Table 5 is 0, indicating that it is not the mTRP scenario, and another parameter in Table 4 remains an original meaning in Table 2. If R is 1, it indicates the mTRP scenario. In this case, Ci indicates whether to report a PHR of a first TRP or a second TRP that are of a terminal and whose serving cell indexes are i. When C is set to 0, it indicates that the first TRP is reported; and when C is set to 1, it indicates that the second TRP is reported. Alternatively, when C is set to 0, it indicates that the second TRP is reported; and when C is set to 1, it indicates that the first TRP is reported. PH(Type 1, PCell TRP Y) indicates a PH value of a reported TRP Y, and Y is a positive integer. For another parameter that is not updated, refer to descriptions in Table 2. Details are not described herein again.

In Table 6, the PHR MAC-CE format (single-CC reporting) in the existing Table 1 is reused and extended, and the R bit indicates whether it is an mTRP scenario.

In a specific implementation, R in Table 6 is 0, indicating that it is not the mTRP scenario, and another parameter in Table 4 remains an original meaning in Table 2. If R is 1, it indicates the mTRP scenario. PH(Type 1, PCell TRP Y) indicates a PH value of a reported TRP Y, and Y is a positive integer. For another parameter that is not updated, refer to descriptions in Table 1. Details are not described herein again.

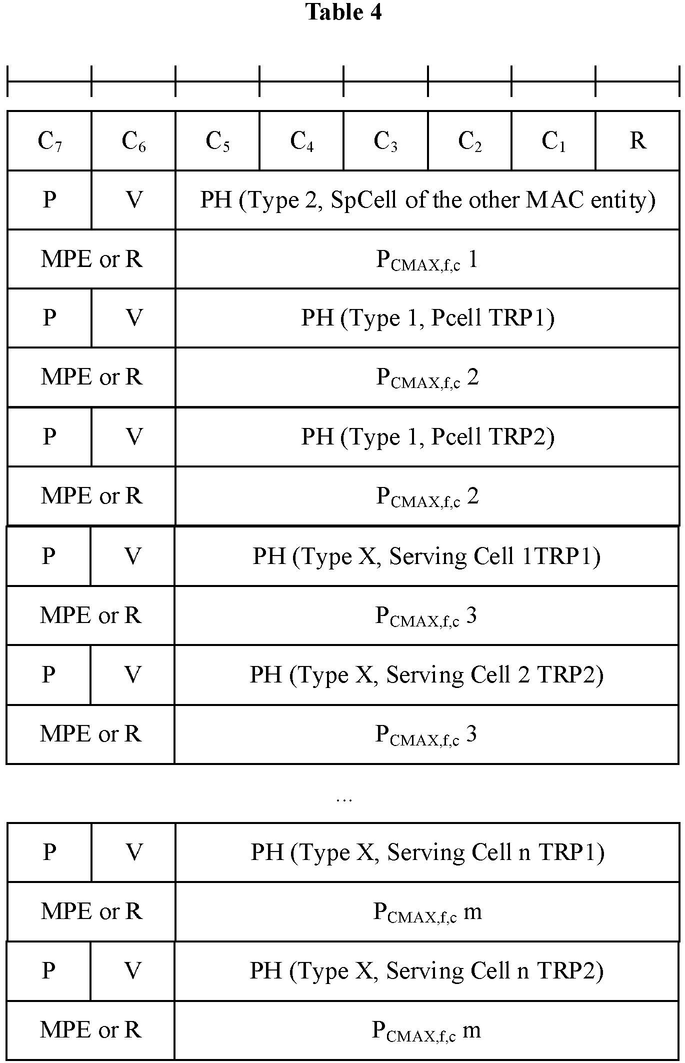

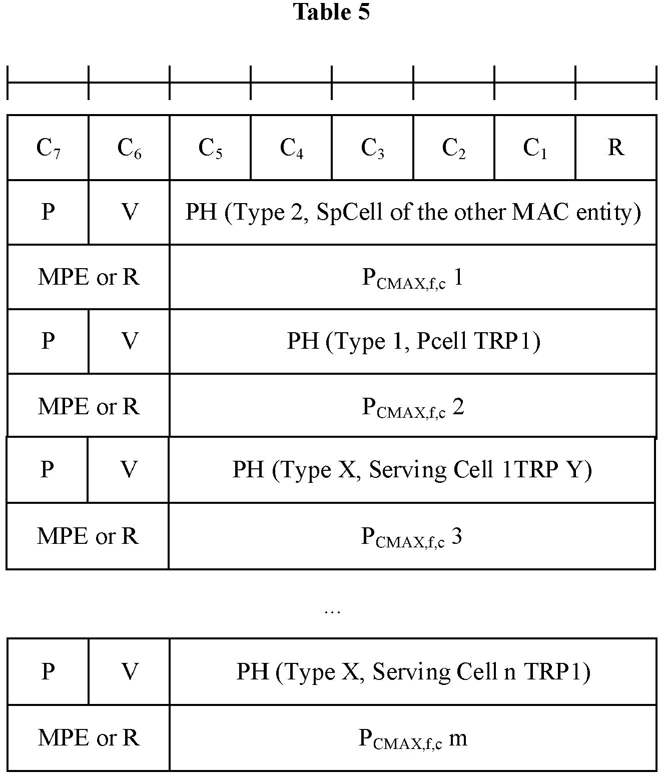

**Table 6**

| | | |
|---|---|---|
| P | R | PH(Type 1, PCell TRP Y) |
| MPE or R | | P_{CMAX,f,c} |

In this technical solution, MAC-CEs are reported by reusing PHRs of a plurality of CCs, to reduce overheads of a logical channel index (logical channel ID, LCID) type of a MAC-CE header, which has small impact on the standard.

It should be understood that the technical solutions in this application may be further applied to panel (panel) or beam (beam) PHR reporting. This is not specifically limited in this application.

The foregoing describes in detail the communication method in this application, and the following describes communication apparatuses in this application.

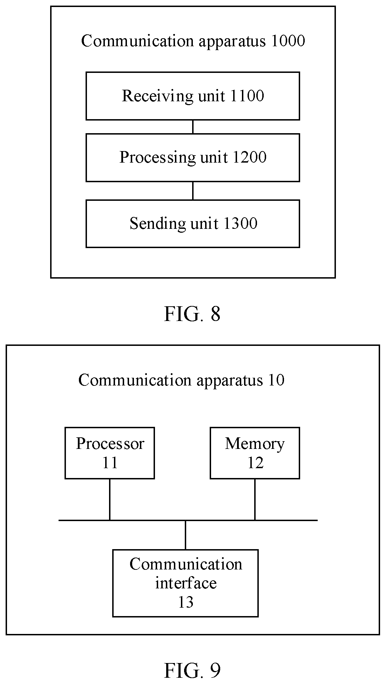

FIG. 8 is a schematic block diagram of a communication apparatus 1000 according to this application.

In a possible design, the communication apparatus 1000 includes a receiving unit 1100, a processing unit 1200, and a sending unit 1300. The communication apparatus 1000 may implement steps or procedures performed by the terminal device in the foregoing method embodiments. For example, the communication apparatus 1000 may be a terminal device, or may be a chip or a circuit configured in the terminal device. The receiving unit 1100 is configured to perform receiving-related operations of the terminal device in the foregoing method embodiments, and the processing unit 1200 is configured to perform processing-related operations of the terminal device in the foregoing method embodiments.

In a possible implementation, the sending unit 1300 is configured to report a first capability. The first capability includes that a total quantity of access network devices supported by a terminal is N, a quantity of component carriers CC supported by the terminal is M, one or more of the M CCs support a plurality of access network devices, and a sum of quantities of access network devices supported by the M CCs is equal to N.

In another possible implementation, the sending unit 1300 is configured to report a second capability, where the second capability includes at least one of the following: a total quantity of calculated power headroom reports PHR supported by a terminal is N, a quantity of component carriers CC supported by the terminal is L, one or more of the L CCs support a plurality of calculated PHRs, and a sum of quantities of calculated PHRs supported by the L CCs is equal to N; a total quantity of reported PHRs supported by a terminal is M, a quantity of component carriers CC supported by the terminal is L, one or more of the L CCs support a plurality of reported PHRs, and a sum of quantities of reported PHRs supported by the L CCs is equal to M; and a quantity of calculated and reported PHRs supported by a terminal is P, a quantity of component carriers CC supported by the terminal is L, one or more of the L CCs support a plurality of calculated and reported PHRs, and a sum of quantities of calculated and reported PHRs supported by the L CCs is equal to P.

In another possible implementation, the receiving unit 1100 is configured to receive first indication information. The first indication information indicates whether the terminal device calculates and reports an actual power headroom report PHR based on a first channel transmission repetition instance, the first channel transmission is one or more of channel transmission repetition instances of a plurality of access network devices supported by a first component carrier CC, and the first CC is a CC supported by the terminal.

Optionally, the first indication information is one or more of a radio resource control message, a media access control control element MAC-CE, or downlink control information DCI.

In another possible implementation, the processing unit 1200 is configured to calculate and report the actual power headroom report PHR based on the first channel transmission repetition instance. The first channel transmission repetition instance is the one or more of channel transmission repetition instances of the plurality of access network devices supported by the first component carrier CC, and the first CC is the CC supported by the terminal.

In another possible implementation, the sending unit 1300 is configured to report information about the first channel transmission repetition instance, where the information includes one or more of the following parameters: a CC index, a cell identifier index, a PCI index, an access network device index, a panel index of a network device and/or the terminal, a beam index, a channel transmission repetition instance index, and a quantity of calculated channel transmission repetition instances.

In another possible implementation, triggered reporting of power headroom reports PHR of two access network devices of the first component carrier CC is configured based on each access network device, where the first CC is a CC supported by the terminal.

When reporting of a first PHR is triggered, the sending unit 1300 is configured to report the PHRs corresponding to the two access network devices, and the first PHR is any one of the two access network devices;
when reporting of a PHR of a first access network device is triggered, the sending unit 1300 is configured to report the PHR corresponding to the first access network device, and a first PHR is any one of the two access network devices;
when there is no channel, between moments at which reporting of the two access network devices is triggered, that can carry a PHR of a first access network device or the PHRs of the two access network devices, the sending unit 1300 is configured to transmit the PHRs of the two access network devices on a first available channel after reporting of a PHR of a second access network device is triggered, and a moment at which reporting of the PHR of the first access network device of the two access network devices is triggered is before a moment at which reporting of the PHR of the second access network device of the two access network devices is triggered; or
moments at which reporting of the two access network devices is triggered are less than a first threshold or within a trigger window, the sending unit 1300 is configured to transmit the PHRs of the two access network devices on a first available channel after reporting of a PHR of a second access network device is triggered, and a moment at which reporting of a PHR of a first access network device of the two access network devices is triggered is before a moment at which reporting of the PHR of the second access network device of the two access network devices is triggered.

Optionally, the sending unit 1300 and the receiving unit 1100 may alternatively be integrated into a transceiver unit, which has both a receiving function and a sending function. This is not limited herein.

Optionally, in an implementation in which the communication apparatus 1000 may be the terminal device in the method embodiments, the sending unit 1300 may be a transmitter, and the receiving unit 1100 may be a receiver. Alternatively, the receiver and the transmitter may be integrated into a transceiver. The processing unit 1200 may be a processing apparatus.

Optionally, in an implementation in which the communication apparatus 1000 may be a chip or an integrated circuit installed in a terminal device, the sending unit 1300 and the receiving unit 1100 may be communication interfaces or interface circuits. For example, the sending unit 1300 is the output interface or the output circuit, the receiving unit 1100 is the input interface or the input circuit, and the processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs operations and/or processing performed by the terminal device in the method embodiments. Optionally, the processing apparatus may include only the processor, and the memory configured to store the computer program is located outside the processing apparatus. The processor is connected to the memory through a circuit/wire, to read and execute the computer program stored in the memory. For another example, the processing apparatus may be a chip or an integrated circuit.

In another possible design, the communication apparatus 1000 may implement steps or procedures performed by the network device in the foregoing method embodiments. For example, the communication apparatus 1000 may be a network device, or may be a chip or a circuit configured in the network device. The receiving unit 1100 is configured to perform receiving-related operations of the network device in the foregoing method embodiments, and the processing unit 1200 is configured to perform processing-related operations of the network device in the foregoing method embodiments.

In a possible implementation, the sending unit 1300 is configured to send first indication information. The first indication information indicates whether a terminal device calculates and reports an actual power headroom report PHR based on a first channel transmission instance, the first channel transmission instance is one or more of channel transmission repetition instances of a plurality of access network devices supported by a first component carrier CC, and the first CC is a CC supported by the terminal.

Optionally, the first indication information is one or more of a radio resource control message, a media access control control element MAC-CE, or downlink control information DCI.

Optionally, the sending unit 1300 and the receiving unit 1100 may alternatively be integrated into a transceiver unit, which has both a receiving function and a sending function. This is not limited herein.

Optionally, in an implementation in which the communication apparatus 1000 may be the network device in the method embodiments, the sending unit 1300 may be a transmitter, and the receiving unit 1100 may be a receiver. Alternatively, the receiver and the transmitter may be integrated into a transceiver. The processing unit 1200 may be a processing apparatus.

Optionally, in an implementation in which the communication apparatus 1000 may be a chip or an integrated circuit installed in a network device, the sending unit 1300 and the receiving unit 1100 may be communication interfaces or interface circuits. For example, the sending unit 1300 is the output interface or the output circuit, the receiving unit 1100 is the input interface or the input circuit, and the processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs operations and/or processing performed by the network device in the method embodiments. Optionally, the processing apparatus may include only the processor, and the memory configured to store the computer program is located outside the processing apparatus. The processor is connected to the memory through a circuit/wire, to read and execute the computer program stored in the memory. For another example, the processing apparatus may be a chip or an integrated circuit.

As shown in FIG. 9, an embodiment of this application provides another transmission mode switching apparatus 10. The apparatus 10 includes a processor 11. The processor 11 is coupled to a memory 12. The memory 12 is configured to store a computer program or instructions and/or data. The processor 11 is configured to: execute the computer program or the instructions stored in the memory 12, or read the data stored in the memory 12, to perform the method in the foregoing method embodiments.

Optionally, there are one or more processors 11.

Optionally, there are one or more memories 12.

Optionally, the memory 12 and the processor 11 are integrated together, or separately disposed.

Optionally, as shown in FIG. 9, the apparatus 10 further includes a transceiver 13, and the transceiver 13 is configured to receive and/or send a signal. For example, the processor 11 is configured to control the transceiver 13 to receive and/or send a signal.

In a solution, the apparatus 10 is configured to perform the operations performed by the terminal device in the foregoing method embodiments.

For example, the processor 11 is configured to execute the computer program or instructions stored in the memory 12, to implement related operations of the terminal device in the foregoing method embodiments.

For another example, the processor 11 is configured to execute the computer program or instructions stored in the memory 12, to implement related operations of the network device in the foregoing method embodiments.

It should be understood that the processor in the embodiment of this application may be an integrated circuit chip, and has a signal processing capability. In an implementation process, the steps in the foregoing method embodiments may be completed by using a hardware integrated logic circuit in a processor or instructions in a form of software. The processor may be a central processing unit (central processing unit, CPU), and may alternatively be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, for example, a random access memory, a flash memory, a read-only memory, a programmable read-only memory, an electrically erasable programmable memory, a register, or the like. The storage medium is located in the memory, and the processor reads information in the memory and implements the step in the foregoing method in combination with hardware of the processor.

A memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in a plurality of forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should be further noted that the memory described in this specification is intended to include, but is not limited to, these memories and any other memory of a suitable type.

In addition, this application further provides a computer-readable storage medium. The computer-readable storage medium stores computer instructions. When the computer instructions are run on a computer, operations and/or procedures performed by the terminal device or the network device in the method embodiments of this application are performed.

This application further provides a computer program product. The computer program product includes computer program code or instructions. When the computer program code or the instructions is/are run on a computer, operations and/or procedures performed by the terminal device or the network device in the method embodiments of this application are performed.

In addition, this application further provides a chip. The chip includes a processor. A memory configured to store a computer program is disposed independent of the chip. The processor is configured to execute the computer program stored in the memory, to perform operations and/or processing performed by the terminal device or the network device in any method embodiment.

Further, the chip may include a communication interface. The communication interface may be an input/output interface, an interface circuit, or the like. Further, the chip may include the memory.

In addition, this application further provides a communication system, including the terminal device and the network device in embodiments of this application.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

The term "and/or" in this application describes only an association relationship between associated objects and represents that three relationships may exist. For example, A and/or B may represent the following three cases: Only A exists, both A and B exist, and only B exists. A, B, and C each may be singular or plural. This is not limited.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing description is merely a specific implementation of this application, but is not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A communication method, comprising:
reporting, by a terminal, a first capability, wherein the first capability comprises that a total quantity of access network devices supported by the terminal is N, a quantity of component carriers CC supported by the terminal is M, one or more of the M CCs support a plurality of access network devices, a sum of quantities of access network devices supported by the M CCs is equal to N, and M and N are positive integers.

2. A communication method, comprising:
reporting, by a terminal, a second capability, wherein the second capability comprises at least one of the following:
a quantity of calculated power headroom reports PHR supported by the terminal is N, a quantity of component carriers CC supported by the terminal is L, one or more of the L CCs support a plurality of calculated PHRs, a sum of quantities of calculated PHRs supported by the L CCs is equal to N, and L and N are positive integers;
a quantity of reported PHRs supported by the terminal is M, a quantity of component carriers CC supported by the terminal is L, one or more of the L CCs support a plurality of reported PHRs, a sum of quantities of reported PHRs supported by the L CCs is equal to M, and M is a positive integer; and
a quantity of calculated and reported PHRs supported by the terminal is P, a quantity of component carriers CC supported by the terminal is L, one or more of the L CCs support a plurality of calculated and reported PHRs, a sum of quantities of calculated and reported PHRs supported by the L CCs is equal to P, and P is a positive integer.

3. A communication method, comprising:
sending first indication information, wherein the first indication information indicates whether a terminal device calculates and reports an actual power headroom report PHR based on a first channel transmission instance, the first channel transmission instance is one or more of channel transmission repetition instances of a plurality of access network devices supported by a first component carrier CC, and the first CC is a CC supported by the terminal.

4. The method according to claim 3, wherein the first indication information is one or more of a radio resource control RRC message, a media access control control element MAC-CE, or downlink control information DCI.

5. A communication method, comprising:
receiving first indication information, wherein the first indication information indicates whether a terminal device calculates and reports an actual power headroom report PHR based on a first channel transmission repetition instance, the first channel transmission is one or more of channel transmission repetition instances of a plurality of access network devices supported by a first component carrier CC, and the first CC is a CC supported by the terminal.

6. The method according to claim 5, wherein the first indication information is one or more of a radio resource control message, a media access control control element MAC-CE, or downlink control information DCI.

7. A communication method, comprising:
calculating and reporting, by a terminal, an actual power headroom report PHR based on a first channel transmission repetition instance, wherein the first channel transmission repetition instance is one or more of channel transmission repetition instances of a plurality of access network devices supported by a first component carrier CC, and the first CC is a CC supported by the terminal.

8. The method according to claim 7, wherein the method further comprises:
reporting, by the terminal, information about the first channel transmission repetition instance, wherein the information comprises one or more of the following parameters:
a CC index, a cell identifier index, a physical cell identifier PCI index, an access network device index, a panel index of a network device and/or the terminal, a beam index, a channel transmission repetition instance index, and a quantity of calculated channel transmission repetition instances.

9. A communication method, comprising:
configuring triggered reporting of power headroom reports PHR of two access network devices of a first component carrier CC based on each access network device, wherein the first CC is a CC supported by a terminal, wherein
when reporting of a first PHR is triggered, the terminal reports the PHRs corresponding to the two access network devices, and the first PHR is any one of the two access network devices;
when reporting of a PHR of a first access network device is triggered, the terminal reports the PHR corresponding to the first access network device, and a first PHR is any one of the two access network devices;
when there is no channel, between moments at which reporting of the two access network devices is triggered, that can carry a PHR of a first access network device or the PHRs of the two access network devices, the terminal transmits the PHRs of the two access network devices on a first available channel after reporting of a PHR of a second access network device is triggered, and a moment at which reporting of the PHR of the first access network device of the two access network devices is triggered is before a moment at which reporting of the PHR of the second access network device of the two access network devices is triggered; or
moments at which reporting of the two access network devices is triggered are less than a first threshold or within a trigger window, the terminal transmits the PHRs of the two access network devices on a first available channel after reporting of a PHR of a second access network device is triggered, and a moment at which reporting of a PHR of a first access network device of the two access network devices is triggered is before a moment at which reporting of the PHR of the second access network device of the two access network devices is triggered.

10. A communication apparatus, comprising:
a sending unit, configured to report a first capability, wherein the first capability comprises that a total quantity of access network devices supported by a terminal is N, a quantity of component carriers CC supported by the terminal is M, one or more of the M CCs support a plurality of access network devices, a sum of quantities of access network devices supported by the M CCs is equal to N, and M and N are positive integers.

11. A communication apparatus, comprising:
a sending unit, configured to report a second capability, wherein the second capability comprises at least one of the following:
a total quantity of calculated power headroom reports PHR supported by a terminal is N, a quantity of component carriers CC supported by the terminal is L, one or more of the L CCs support a plurality of calculated PHRs, a sum of quantities of calculated PHRs supported by the L CCs is equal to N, and L and N are positive integers;
a total quantity of reported PHRs supported by a terminal is M, a quantity of component carriers CC supported by the terminal is L, one or more of the L CCs support a plurality of reported PHRs, a sum of quantities of reported PHRs supported by the L CCs is equal to M, and M is a positive integer; and
a quantity of calculated and reported PHRs supported by a terminal is P, a quantity of component carriers CC supported by the terminal is L, one or more of the L CCs support a plurality of calculated and reported PHRs, a sum of quantities of calculated and reported PHRs supported by the L CCs is equal to P, and P is a positive integer.

12. A communication apparatus, comprising:
a sending unit, configured to send first indication information, wherein the first indication information indicates whether a terminal device calculates and reports an actual power headroom report PHR based on a first channel transmission instance, the first channel transmission instance is one or more of channel transmission repetition instances of a plurality of access network devices supported by a first component carrier CC, and the first CC is a CC supported by the terminal.

13. The apparatus according to claim 12, wherein the first indication information is one or more of a radio resource control RRC message, a media access control control element MAC-CE, or downlink control information DCI.

14. A communication apparatus, comprising:
a receiving unit, configured to receive first indication information, wherein the first indication information indicates whether a terminal device calculates and reports an actual power headroom report PHR based on a first channel transmission repetition instance, the first channel transmission is one or more of channel transmission repetition instances of a plurality of access network devices supported by a first component carrier CC, and the first CC is a CC supported by the terminal.

15. The apparatus according to claim 14, wherein the first indication information is one or more of a radio resource control message, a media access control control element MAC-CE, or downlink control information DCI.

16. A communication apparatus, comprising:
a processing unit, configured to calculate and report an actual power headroom report PHR based on a first channel transmission repetition instance, wherein the first channel transmission repetition instance is one or more of channel transmission repetition instances of a plurality of access network devices supported by a first component carrier CC, and the first CC is a CC supported by a terminal.

17. The apparatus according to claim 16, wherein the apparatus further comprises:
a sending unit, configured to report information about the first channel transmission repetition instance, wherein the information comprises one or more of the following parameters:
a CC index, a cell identifier index, a PCI index, an access network device index, a panel index of a network device and/or the terminal, a beam index, a channel transmission repetition instance index, and a quantity of calculated channel transmission repetition instances.

18. A communication apparatus, comprising:
a sending unit, wherein
triggered reporting of power headroom reports PHR of two access network devices of a first component carrier CC is configured based on each access network device, wherein the first CC is a CC supported by a terminal, wherein
when reporting of a first PHR is triggered, the sending unit is configured to report the PHRs corresponding to the two access network devices, and the first PHR is any one of the two access network devices;
when reporting of a PHR of a first access network device is triggered, the sending unit is configured to report the PHR corresponding to the first access network device, and a first PHR is any one of the two access network devices;
when there is no channel, between moments at which reporting of the two access network devices is triggered, that can carry a PHR of a first access network device or the PHRs of the two access network devices, the sending unit is configured to transmit the PHRs of the two access network devices on a first available channel after reporting of a PHR of a second access network device is triggered, and a moment at which reporting of the PHR of the first access network device of the two access network devices is triggered is before a moment at which reporting of the PHR of the second access network device of the two access network devices is triggered; or
moments at which reporting of the two access network devices is triggered are less than a first threshold or within a trigger window, the sending unit is configured to transmit the PHRs of the two access network devices on a first available channel after reporting of a PHR of a second access network device is triggered, and a moment at which reporting of a PHR of a first access network device of the two access network devices is triggered is before a moment at which reporting of the PHR of the second access network device of the two access network devices is triggered.

19. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 9.

20. A computer-readable storage medium, wherein the computer-readable storage medium stores computer instructions, and when the computer instructions are run on a computer, the method according to any one of claims 1 to 9 is performed.

21. A computer program product, wherein the computer program product comprises computer program code, and when the computer program code is run on a computer, the method according to any one of claims 1 to 9 is performed.
